# EUROPÄISCHE PATENTANMELDUNG

(11) **EP 2 065 845 A1**
(43) Veröffentlichungstag der Anmeldung: **03.06.2009**
(21) Anmeldenummer: 08017164.8
(22) Anmeldetag: 30.09.2008
(51) Int. Cl.: G06Q 10/00

(54) **Verfahren zur Planung und Projektierung von Bauwerken, insbesondere von Bahnhöfen zur Personenbeförderung**

(30) Priorität: 29.11.2007 DE 102007057899
(71) Anmelder: DB Station & Service AG, 10963 Berlin (DE)
(72) Erfinder: Hallenberger, Ewald, 60598 Frankfurt - Sachsenhausen (DE); Wagner, Adolf, 65510 Idstein (DE)
(74) Vertreter: Zinken-Sommer, Rainer

(57) **Zusammenfassung**

Die Erfindung betrifft ein Verfahren zur Planung und Projektierung von Bauwerken, das die vielseitigen Anforderungen der Kunden an die Bahnhöfe zur Personenbeförderung in innovative, neue Lösungen für Konstruktionen von Bauwerken erfüllt, die nicht nur in der Phase der Erstellung sinnvoll sind, sondern auch über den gesamten Lebenszyklus eines Bauwerkes technisch und wirtschaftlich darstellbar sind. Hierbei wird mindestens eine internetbasierte Informationsdatenbank verwendet.

Der Erfindung liegt die Aufgabe zugrunde, ein Verfahren zur Planung und Projektierung von Bauwerken, insbesondere von Bahnhöfen zu entwickeln, welches neben innovativen, neuen Konstruktionsideen vorhandene Erfahrungen beim Entwurf ähnlicher Bauten nutzt, wiederkehrende Prozess-Schritte einbezieht, eine strukturierte Herangehensweise gewährleistet und eine aktive Einbeziehung von verschiedenen Nutzern ermöglicht.

Die Aufgabe wird erfindungsgemäß dadurch gelöst, dass
bei der Modernisierung und/oder der Optimierung und/oder dem Neubau von Bahnhöfen die Planung und Projektierung unter Beachtung einer durchgehend funktionierenden Reisekette in derart erfolgt, dass
- aufbauend auf der Verwendung einer Bibliotheksdatenbank und eines internetbasierten Diskussionsforums in einem ersten Schritt auf der Basis eines Ausstattungstools eine Definition von Einsatzbereichen und von möglichen Mengengerüsten durchgeführt wird,
- danach in einem Planungstool eine Auswahl der für den Bahnhof notwendigen Infrastruktur und Technik durchgeführt wird und
- über ein modulartig zusammengestelltes Baukastentool für jedes einzelne Modul eine Auswahl von zur Verfügung stehenden Ausstattungselementen realisiert und die jeweils möglichen Detaillösungen mit vorhandenen Best-Practice-Beispielen verknüpft sowie jeder Modulvorschlag zur Bewertung und Anreicherung mit eigenen technischen Lösungen den berechtigten Nutzern zur Verfügung gestellt, diskutiert und über den gesamten Lebenszyklus technisch sowie kostenmäßig bewertet wird und
- nachfolgend eine Auswahl von möglichen Mobiliar und Einrichtungen aus einer katalogartigen Datenbank durchgeführt wird.

## Beschreibung

Die Erfindung betrifft ein Verfahren zur Planung und Projektierung von Bauwerken, insbesondere von Bahnhöfen zur Personenbeförderung, wobei mindestens eine internetbasierte Informationsdatenbank verwendet wird.

Jeder Bahnhof gliedert sich in die wesentlichen Bereiche Verkehrsstation und Empfangsgebäude mit ihren jeweiligen funktionalen und formalen Qualitäten. Diese Bereiche bilden das Bindeglied zwischen den Zügen (Carrier) und der jeweiligen Stadt. Zum einen bereiten sie den Reisenden als Tor zur Bahn auf die Fahrt vor, zum anderen werden sie als Visitenkarte der Stadt gesehen.

Der Neubau, die Modernisierung und die Optimierung von Bahnhöfen stellt unter diesen Randbedingungen eine sehr komplexe Aufgabe für Planer und Projektanten dar. Die vielseitigen Anforderungen der Kunden an die Bahnhöfe erfordern innovative, neue Lösungen für Konstruktionen von Bauwerken, die nicht nur in der Phase der Erstellung sinnvoll sind, sondern auch über den gesamten Lebenszyklus eines Bauwerkes technisch und wirtschaftlich darstellbar sind. Hierbei spielt z.B. der mögliche Vandalismus als Einflussgröße für die Gestaltung von Konstruktionen eine wesentliche Rolle.
Im Laufe der Planung und Projektierung eines Bahnhofes müssen die verschiedensten Arten von gesetzlichen Auflagen, Richtlinien und Rahmenbedingungen berücksichtigt werden. Die Informationen hierzu sucht der Bauherrenvertreter, der Projektleiter und der Planer aus einer Fülle von Quellen zusammen. Darüber hinaus ist die Einhaltung der projektierten Kosten von großer Bedeutung. Als Kosten müssen sowohl die Kosten der Planung und Umsetzung des Bauvorhabens, wie auch die Kosten des Betriebs, der Wartung und der Instandhaltung betrachtet werden. Eine Kostenoptimierung auf der Basis des "Life-Cycle-Cost Gedanken" wird somit eine wichtige Vorsaussetzung für das Gelingen eines derartigen Bauvorhabens.

Gleiches gilt für die Optimierung der vorhandenen Anlagen im Rahmen des Facility-Managements. Hier steht vor allem der Einsatz von Materialien und Bauteilen, die sich in vorausgegangenen Projekten bewährt haben, im Focus.

Bekannte Bahnhofsprojekte wurden bislang nach den üblichen Planungs- und Projektierungsgrundsätzen ausgeführt, wobei in dieser Phase intensive Abstimmungen zwischen dem Bauherren, den Planern, Architekten und Projektanten, den Behörden und den verantwortlichen Stellen der jeweiligen Stadt durchgeführt werden müssen, die z. T. einen Zeitverlauf von mehreren Jahren umfassen können. Jeder Bahnhof ist in diesem Sinne als ein Unikat zu betrachten, welches nicht ohne weiteres an einem anderen Ort in gleicher Art und Weise zur Ausführung kommen kann. Der zu bauende Bahnhof ist dann allerdings oftmals eine Summe von Teillösungen und kein optimiertes Gesamtwerk.
Ein System zur Abwicklung derartiger Projekte nach baukastenartigen Gesichtspunkten ist unbekannt. Fehler bei der Planung und Umsetzung der Projekte wiederholen sich in der gegenwärtigen Praxis laufend. Der Aufwand insbesondere im Betrieb einer Station ist dementsprechend hoch. Ein einheitlicheres Erscheinungsbild der Bahnhöfe ist nur schwer realisierbar. Bauherrenvertreter und externe Planer benötigen dringend ein Instrument, mit dem Konstruktionsfehler vermieden werden.

Betrachtet man vergleichbar komplizierte und aufwändige Projekte in anderen Wirtschaftsbereichen, findet man in der DE 10 2004 033 378 A1 eine Methode und ein System für das automatisierte Konfigurieren von Raum, Ausstattung und Kosten einer Gesundheitsfürsorgeeinrichtung. Die Lösung beschreibt insbesondere ein computergestütztes System, welches Projektierungsaufwand senken und den Verlust von Informationen vermeiden soll. In einer Ausführungsform stellt diese Lösung die Online-Vorbereitung einer auf Kundenwünsche abgestimmten und prozessoptimierten Einrichtung als Computerprogramm dar. Kostengesichtspunkte werden im Rahmen einer Kostendatenbank berücksichtigt. Ausstattungsgesichtspunkte finden sich in einer Ausstattungsdatenbank wieder.
Eine aktive Einbeziehung von System-Nutzern zur Vermeidung von Fehlplanungen findet nicht statt. Die Lösung beschränkt sich auf ein reines ComputerProgramm zur Erstellung der Planung und Projektierung einer Gesundheitsfürsorgeeinrichtung.
Ähnliche Planungstools finden sich auch auf anderen Gebieten, so z. B. für katalogbasierte Bestellsysteme (DE 10 2005 053 944A1, US 2006/0173979 A1) wieder.

Der Erfindung liegt die Aufgabe zugrunde, ein Verfahren zur Planung und Projektierung von Bauwerken, insbesondere von Bahnhöfen zu entwickeln, welches vorhandene Erfahrungen beim Entwurf ähnlicher Bauten aus dem Betrieb nutzt, wiederkehrende Prozess-Schritte einbezieht, eine strukturierte Herangehensweise gewährleistet und eine aktive Einbeziehung von verschiedenen Nutzern ermöglicht.

Die Aufgabe wird erfindungsgemäß dadurch gelöst, dass bei der Modernisierung und/oder der Optimierung und/oder dem Neubau von Bahnhöfen die Planung und Projektierung unter Beachtung einer durchgehend funktionierenden Reisekette in derart erfolgt, dass
- aufbauend auf der Verwendung einer Bibliotheksdatenbank und eines internetbasierten Diskussionsforums in einem ersten Schritt auf der Basis eines Ausstattungstools eine Definition von Einsatzbereichen und von möglichen Mengengerüsten durchgeführt wird,
- danach in einem Planungstool eine Auswahl der für den Bahnhof notwendigen Infrastruktur und Technik durchgeführt wird und
- über ein modulartig zusammengestelltes Baukastentool für jedes einzelne Modul eine Auswahl von zur Verfügung stehenden Ausstattungselementen realisiert und die jeweils möglichen Detaillösungen mit vorhandenen Best-Practice-Beispielen verknüpft sowie jeder Modulvorschlag zur Bewertung und Anreicherung mit eigenen technischen Lösungen den berechtigten Nutzern zur Verfügung gestellt, diskutiert und über den gesamten Lebenszyklus technisch sowie kostenmäßig bewertet wird und
- nachfolgend eine Auswahl von möglichen Mobiliar und Einrichtungen aus einer katalogartigen Datenbank durchgeführt wird.

Anhand eines Ausführungsbeispieles soll nachstehend die Erfindung näher erläutert werden.

Das Verfahren basiert auf zwei miteinander via Internet verknüpften Elementen, die folgendes aufweisen:
1. Diskussionsforum: eine Plattform zum Wissensaustausch eines definierten Leser- und Schreiberkreises zu Bahnhofsprojekten
2. Bibliothek: eine Informationsdatenbank, eine Planungsvorgabe, konstruktive Beispiele als Umsetzungsgrundlage für Bauvorhaben an Bahnhöfen

Die Bibliothek ist ein Informationstool für den Neubau und die Modernisierung sowie die Optimierung bereits bestehender Bahnhöfe. Dieses Werkzeug steht in Form einer internetbasierten Informationsdatenbank zur Verfügung.
Die Bibliothek ist als Ergänzung zu einem Datenspeicher (Ausstattungshandbuch/-tool), der Einsatzbereiche und Mengen definiert, einem Datenspeicher (Produktkatalog/-tool), mit dessen Hilfe z. B. Bahnsteigmobiliar einer bestimmten Qualität ausgewählt wird und einem Datenspeicher (Planungshandbuch/- tool) für Bau und Technik, der technische Anforderungen beschreibt, zu sehen. Anhand von Praxisbeispielen wird die Bibliothek sowohl als Muster zu verwendende Lösungen mittels eines Ausführungsbeispieles, Text und Fotos als auch nicht verwendungsfähige Beispiele vorhalten, wobei die Vor- und Nachteile verschiedener Lösungen verdeutlicht werden.

Der Zugang zur Bibliothek wird in einer ersten Phase Projektleitern und Bauherrenvertretern des Auftraggebers gewährt. Er wird durch die Vergabe von Passwörtern reguliert.
In einer zweiten Phase wird der Zugang externen Planern, Aufgabenträgern und weiteren interessierten Nutzern gewährt und ebenfalls über Passwörter geregelt.
Eine letzte Phase sieht den Zugriff der Öffentlichkeit auf Teile der Bibliothek vor, wobei zwischen Informationen von allgemeinem und planerischem Interesse unterschieden werden muss.

Die Planung und Projektierung geschieht in drei Gliederungsebenen, wobei als Gliederungsebenen verstanden werden:
- Gliederungsebene 1 - vier Bahnhofsbereiche (Vorplatz und Umfeld, Empfangsgebäude, Zugänge, Bahnsteig) und der Bereich technische Anlagen
- Gliederungsebene 2 - die einzelnen Elemente der Bahnhofsbereiche und
- Gliederungsebene 3 - die kleinsten Bauteile des Bahnhofs (Details) verstanden werden. In dieser Ebene erfolgt ebenfalls ein Vergleich der einzelnen Elemente mit Positiv- und Negativbeispielen und eine Verknüpfung mit einem Diskussionsforum, in das definierte Nutzer eigene Vorschläge zu Elementen und Bauteilen (Details) unterbreiten können.

Das Diskussionsforum ist - wie die Bibliothek - eine internetbasierte Plattform, die die Möglichkeit zum fachlichen Austausch bezüglich der einzelnen Inhalte der Gliederungsebenen 1 bis 3 eröffnet.
Es ist direkt mit der Bibliothek und den dort beinhalteten Inhalten verknüpft und bezieht sich auf deren einzelnen Themen.

Die Anwendung gliedert sich in folgende Möglichkeiten:
- Der Anwender kann sich mit weiteren Nutzern über Erfahrungen mit der Anwendung der Bibliothek austauschen.
- Der Anwender kann eigene konstruktive Beitragsvorschläge (mit Texten, Bildern und Plänen) für die Bibliothek in den offenen Diskussionsbereich einstellen.
- Der Anwender hat die Möglichkeit Stellungnahmen zu den Bibliotheksbeiträgen abzugeben.
- Der Anwender kann für sein Projekt relevante Hinweise von den Berichten weiterer Anwender erhalten.
- Die Erfahrungen von Projektleitern, Bauherrenvertretern des Auftraggebers, Planern und Aufgabenträgern in Bezug auf Bauwerke über den gesamten Lebenszyklus werden zusammengeführt und schaffen einen Wissenspool, auf den jederzeit zurückgegriffen werden kann.

Der Zugriff auf diese Datenbank wird ebenso, wie bei der Bibliothek geregelt.

Das Diskussionsforum bietet seinen Nutzern zwei Möglichkeiten zum verfassen und lesen von Beiträgen:
- Es gibt zu jedem der vier Bahnhofsbereiche und zum Bereich Technische Ausrüstungen ein internetbasiertes "Schwarzes Brett", das alle Diskussionsbeiträge inklusive der Beiträge zu den Unterpunkten in aggregierter Form darstellt.
- Von der Bibliothek aus können die Beiträge fachlich sortiert an den entsprechenden Unterpunkten eingesehen und ergänzt werden.

Auf diese Weise werden seine Besucher zur Teilnahme an der Diskussion eingeladen und ermutigt, eigene Beiträge in Form verbesserter technischer Lösungen einzubringen.

### Redaktion und Expertenteam

Es ist eine übergreifende Steuerung durch eine Redaktion und ein Expertenteam geplant, deren Rolle es ihnen erlaubt, unpassende und/oder unsachliche Einträge auszusortieren.

Die Redaktion organisiert Meetings des Expertenteams zur Auswertung der Eingänge und zur Entscheidung über die Einstellung von Beiträgen in den Bibliotheksbereich. Das Expertenteam setzt sich aus ausgewählten Bauleitern und Planern zusammen. Es steht in direkter Verbindung mit der Redaktion und findet sich in regelmässigen Abständen zusammen, um Beiträge und Kommentare für den Stationsbaukasten auszuwerten und zu beurteilen.
Das Expertenteam entscheidet über die Freigabe der Eingänge für den BibliotheksBereich.
Die Redaktion soll die Diskussion verfolgen und die Inhalte der Bibliothek gegebenenfalls auf Grundlage der Anregungen aus dem Diskussionsforums ergänzen oder berichtigen.
Ein weiterer Aufgabenbereich der Redaktion umfasst die Vergabe von Passwörtern (Registrierung) und die Qualitätsüberwachung der eingegangenen Beiträge und Stellungnahmen.

Folgende Ziele werden mit der erfindungsgemäßen Lösung umgesetzt:
1. Alle Akteure werden in den Umsetzungs- und Planungsprozess einbezogen.
2. Das Wissen, die Erfahrungen und neuen Ideen der Anwender zu einzelnen Elementen oder Detaillösungen wird über die Eingabe in das Diskussionsforum zugänglich macht.
3. Planungs- und Ausführungsfehler werden vermieden.
4. Eine Kostenoptimierung wird durch den "Life-Cycle-Cost Gedanken" gesichert.
5. Die einheitliche Gestaltung der Bahnhöfe wird gewährleistet und stärkt die "Marke Bahnhof".

## Patentansprüche

1. Verfahren zur Planung und Projektierung von Bauwerken, insbesondere von Bahnhöfen zur Personenbeförderung, wobei mindestens eine internetbasierte Informationsdatenbank verwendet wird,
***gekennzeichnet dadurch, dass***
bei der Modernisierung und/oder der Optimierung und/oder dem Neubau von Bahnhöfen die Planung und Projektierung unter Beachtung einer durchgehend funktionierenden Reisekette in derart erfolgt, dass
- aufbauend auf der Verwendung einer Bibliotheksdatenbank und eines internetbasierten Diskussionsforums in einem ersten Schritt auf der Basis eines Ausstattungstools eine Definition von Einsatzbereichen und von möglichen Mengengerüsten durchgeführt wird,
- danach in einem Planungstool eine Auswahl der für den Bahnhof notwendigen Infrastruktur und Technik durchgeführt wird und
- über ein modulartig zusammengestelltes Baukastentool für jedes einzelne Modul eine Auswahl von zur Verfügung stehenden Ausstattungselementen realisiert und die jeweils möglichen Detaillösungen mit vorhandenen Best-Practice-Beispielen verknüpft sowie jeder Modulvorschlag zur Bewertung und Anreicherung mit eigenen technischen Lösungen den berechtigten Nutzern zur Verfügung gestellt, diskutiert und über den gesamten Lebenszyklus technisch sowie kostenmäßig bewertet wird und
- nachfolgend eine Auswahl von möglichen Mobiliar und Einrichtungen aus einer katalogartigen Datenbank durchgeführt wird.

2. Verfahren nach Anspruch 1, **gekennzeichnet dadurch, dass** im Ausstattungstool eine Zuordnung von notwendigen technischen Lösungen zu geeigneten Einsatzorten im Bahnhof durchgeführt wird, wobei vorrangig nach dem Kriterium der Geeignetheit eine Auswahl vorgenommen wird.

3. Verfahren nach Anspruch 1, **gekennzeichnet dadurch, dass** im Planungstool eine Detailvorgabe für technische Einrichtungen und Gebäude durchgeführt wird.

4. Verfahren nach Anspruch 1, **gekennzeichnet dadurch, dass** im Baukastentool eine Umsetzungsordnung hinterlegt wird, die in Verbindung mit einer Anzahl zum jeweiligen technischen Detail vorhandener Best-Practice-Beispielen gebracht wird.

5. Verfahren nach Anspruch 1 bis 4, **gekennzeichnet dadurch, dass** die gesamte Planung und Projektierung in mehreren Gliederungsebenen, vorzugsweise drei Gliederungsebenen durchgeführt wird.

6. Verfahren nach Anspruch 5, **gekennzeichnet dadurch, dass** in Gliederungsebene eins die Bahnhofsbereiche in
- Vorplatz und Umfeld
- Empfangsgebäude
- Zugänge
- Bahnsteig sowie
einen zusätzlichen Bereich Maschinen und elektrotechnische Anlagen unterteilt werden.

7. Verfahren nach Anspruch 5 und 6, **gekennzeichnet dadurch, dass** in Gliederungsebene zwei jeder einzelne Bahnhofsbereich in einzelne Elemente unterteilt wird.

8. Verfahren nach Anspruch 5 bis 7, **gekennzeichnet dadurch, dass** in Gliederungsebene drei alle Elemente in entsprechende Detaillösungen unterteilt werden.

9. Verfahren nach Anspruch 8, **gekennzeichnet dadurch, dass** die entsprechenden Detaillösungen mit einer internetbasierten Bewertungsmöglichkeit der berechtigten Nutzer verknüpft werden.
